Europäisches Patentamt

(19) European Patent Office

Office européen des brevets

(11) Numéro de publication: **0 023 451**
**B1**

(12) **FASCICULE DE BREVET EUROPEEN**

(45) Date de publication du fascicule du brevet:
**19.01.83**

(51) Int. Cl.³: **F 17 C 5/06**, F 16 L 27/08

(21) Numéro de dépôt: **80401087.4**

(22) Date de dépôt: **22.07.80**

(54) **Dispositif d'alimentation d'une plate-forme tournante en fluide gazeux sous haute pression.**

(30) Priorité: **25.07.79 FR 7919164**

(43) Date de publication de la demande:
**04.02.81 Bulletin 81/5**

(45) Mention de la délivrance du brevet:
**19.01.83 Bulletin 83/3**

(84) Etats contractants désignés:
**DE GB IT NL SE**

(56) Documents cités:
**BE-A-568 003**
**DE-C-718 178**
**DE-C-847 537**
**FR-A-1 220 293**

(73) Titulaire: **SOCIETE ANONYME DE
TELECOMMUNICATIONS, 41, rue Cantagrel,
F-75624 Paris Cedex 13 (FR)**

(72) Inventeur: **Mongrolle, Yves, Louis, 15, Rue Madame,
F-75006 Paris (FR)**

(74) Mandataire: **Petit, Alain et al, OFFICE JOSSE &
PETIT 126 Boulevard Haussmann, F-75008 Paris (FR)**

BUNDESDRUCKEREI BERLIN

## Dispositif d'alimentation d'une plate-forme tournante en fluide gazeux sous haute pression

L'invention se rapporte à un dispositif d'alimentation d'une plate-forme tournante en fluide gazeux sous haute pression, cette dernière expression désignant ici un domaine de pressions supérieur à 100 bars et pouvant atteindre 500 bars et plus, que l'on rencontre notamment dans le cas des plate-formes ou tourelles de détection infra-rouge comportant un système refroidissement par détente Joule-Thompson alimenté en fluide gazeux sous haute pression.

L'alimentation considérée d'une plate-forme tournante à partir d'un châssis qui la supporte sur lequel est implantée la source de pression nécessite un joint tournant et, sous de telles pressions et pour une utilisation en rotation continue de la plate-forme, le joint tournant se trouve soumis à des conditions de service sévères entraînant une rénovation périodique gênante accompagnée d'un arrêt de fonctionnement de l'appareillage d'utilisation installé sur la plate-forme.

La présente invention a pour effet de remédier grandement à cet inconvénient par un agencement relativement simple accroissant notablement la durée de vie du joint tournant.

Essentiellement, à cet effet, le dispositif selon l'invention d'alimentation en fluide gazeux sous haute pression d'une plate-forme tournante sur un châssis sur lequel est disposée la source de pression, comprenant un joint tournant incluant deux éléments conducteurs de fluide montés à rotation relative dans l'axe géométrique de rotation de la plate-forme, l'un de ces éléments solidaire en rotation de la plate-forme étant raccordé à un appareillage d'utilisation du fluide disposé sur la plate-forme et l'autre étant destiné à être alimenté par ladite source de pression, est caractérisé en ce que l'élément conducteur de fluide du joint destiné à être alimente par la source de pression est libre en rotation par rapport à l'autre élément et à la source de pression, et est relié à cette dernière par un raccord désaccouplable, ce raccord permettant d'accouples dè façon étanche l'élément conducteur de fluide à la source lors de l'alimentation en fluide sous pression, ou cours de laquelle cet élément est immobilisé en rotation par rapport á l'autre élément.

Ainsi, lorsque l'alimentation en fluide gazeux de la plateforme n'est nécessaire que pendant une fraction de temps de sa rotation, les deux éléments précités du joint tournant tournent ensemble sans fatigue le reste du temps, et l'on gagne d'autant sur la durée de vie de ce dernier.

Suivant un aspect plus particulièrement intéressant de l'invention, notamment lorsque la plate-forme est à rotation continue dans le temps et l'utilisation de fluide sous pression fréquente ou même permanente, il est alors avantageusement prévu pour l'appareillage d'utilisation un réservoir d'accumulation de fluide sous pression sur la plate-forme destiné à être rempli et rechargé au travers de moyens de non-retour par commande de mise en débit de ladite source de pression et accouplement du raccord entre deux valeurs prédéterminées de pression dans ledit réservoir.

Un autre aspect de l'invention réside également dans la possibilité d'utiliser seulement le fluide sous pression émanant de la source lors de l'alimentation commandée de la plate-forme pour provoquer de manière simple l'accouplement du raccord désaccouplable précité, normalement désaccouplé.

D'autres particularités de l'invention apparaîtront également dans la description suivante d'une forme de réalisation de cette dernière donnée à titre d'exemple et en référence au dessin annexé, dans lequel:

— la figure 1 est une vue en coupe axiale d'un joint tournant implanté entre une plate-forme tournante et un châssis avec représentation schématique partielle d'un appareillage d'utilisation de fluide sous haute pression et d'une commande d'alimentation de celui-ci;
— la figure 2 est une vue de détail d'une variante de réalisation affectant ledit raccord désaccouplable à accouplement commandé.

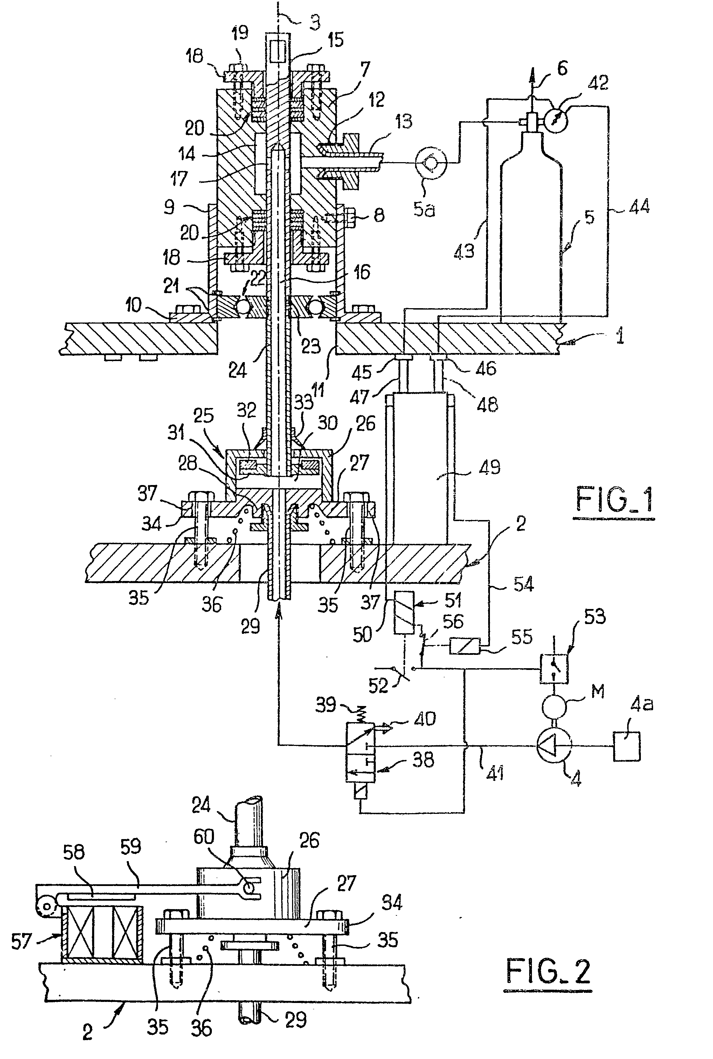

On a représenté à la figure 1 un dispositif d'alimentation en fluide gazeux sous haute pression d'une plate-forme tournante 1 partiellement représentée et supportée par un châssis 2 par rapport auquel elle est guidée en rotation autour d'un axe géométrique désigné par 3, par l'intermédiaire d'un chemin de guidage en couronne non visible au dessin et dont le centre coïncide avec l'axe 3.

La source de pression est schématisée en 4 sous le forme d'un compresseur qui est à voir comme installé sur le châssis, et l'appareillage d'utilisation installé sur la plate-forme 1 est doté d'un réservoir d'accumulation 5 de fluide sous haute pression, raccordé par une canalisation 6 à l'appareillage proprement dit et alimenté par la voie d'un clapet de non-retour 5a.

Un joint tournant conducteur de fluide est disposé sur la plate-forme 1 et comprend un corps 7 monté amovible par vis 8 dans une bague de support 9 qui est pourvue d'une bride de fixation par vis 10, centrée sur un trou 11 de la plate-forme dans l'axe duquel passe l'axe 3.

Le corps 7 présente une tubulure de raccordement 12 d'une canalisation 13 d'alimentation du réservoir d'accumulation 5, laquelle débouche dans une chambre centrale 14 du corps 7, que traverse axialement un arbre 15 formant conduit d'admission du fluide gazeux sous pression dans le joint tournant. L'arbre 15 présente un conduit axial 16 ouvert à son extrémité inférieure et des passages radiaux 17 débouchant dans la chambre 14. L'étanchéité de l'arbre 15 dans le corps 7 est assurée par l'intermédiaire de presse-étoupe appropriés représentés ici comme comportant des brides 18 de presse-étoupe à vis de serrage 19 de joints 20 en rondelles souples et dures alternées entourant l'arbre de part et d'autre de la chambre 14.

Dans la bague de support 9 est également calée à l'aide de circlips 21, la bague extérieure d'une butée à billes 22 dans la bague intérieure de laquelle est vissée à mi-épaisseur l'extrémité inférieure filetée de l'arbre 15.

En vis-à-vis de cette dernière, avec interposition d'un joint plat d'étanchéité 23 par compression, est vissée l'extrémité supérieure filetée d'un conduit 24 de sortie d'un raccord désaccouplable désigné dans son ensemble par 25. Ce raccord comprend un corps 26 vissé sur une embase 27 pourvue d'une tubulure de raccordement 28 d'une canalisation d'alimentation 29 qui débouche dans une chambre 30 ménagée par le corps 26 et l'embase 27 et dans laquelle pénètre avec jeu le conduit de sortie 24 du raccord. Ce conduit 24 est pourvu, à son extrémité interne à la chambre 30, d'un plateau circulaire 31 par rapport auquel le corps 26 peut se déplacer axialement dans le sens de la fermeture ou de l'ouverture de la chambre 30, ainsi qu'expliqué plus loin. Le plateau 31 est pourvu face au corps 26 d'un anneau en élastomère 32 destiné à assurer l'étanchéité à la fermeture de la chambre 30 ainsi qu'un accouplement du plateau 31 avec le corps 26 sous la pression de fluide appelée à régner dans cette chambre.

Le conduit 24 porte un joint à lèvre 33 s'appuyant en flexion élastique sur le corps 26 et formant à la fois clapet de décharge à l'atmosphère de la chambre 30 et de non-rentrée d'air vers celle-ci. L'embase 27 du raccord est pourvue d'une bride 34 montée coulissante sur des tiges-guides 35 parallèles à l'axe 3 et vissées dans le châssis 2. Cette embase 27 est sollicitée par un ressort 36 en position haute de butée contre les têtes des tiges-guides 35, position dans laquelle le corps 26 se trouve normalement espacé du plateau 31, ce qui correspond à la position d'ouverture de la chambre 30 représentée au dessin. La bride 34 est montée coulissante sur les tiges-guides 35 par des orifices 37 de diamètre supérieur à celui de ces dernières, de sorte qu'aucun problème de centrage précis n'existe entre le conduit 24 de sortie lié à l'arbre 15 du joint tournant et l'ensemble du corps 26 et de l'embase 27 du raccord.

La canalisation 29 est destinée à être reliée à une source de fluide gazeux sous haute pression qui peut être constituée, comme schématisé au dessin, par le compresseur 4 implanté sur le châssis et puisant dans une source à moindre pression du fluide gazeux considéré schématisée en 4a. Le compresseur 4 peut être d'un type comportant une mise à l'atmosphère de sa sortie de refoulement lorsqu'il est à l'arrêt. S'il n'assure pas cette condition, une électrovanne 38 à trois orifices — deux positions peut alors être interposée entre le raccord 25 et le compresseur 4 afin de mettre normalement, sous l'action du ressort 39, la canalisation 29 en décharge vers l'atmosphère, par l'intermédiaire d'un clapet élastique 40 de décharge et non-rentrée d'air, tandis que la canalisation 41 reliant l'électrovanne au compresseur se trouve obturée.

On notera d'abord que lorsque l'ensemble du dispositif d'alimentation est dans la position représentée au dessin, le réservoir d'accumulation 5 de fluide sous pression étant supposé chargé à la pression désirée, la plate-forme peut tourner de façon continue et son appareillage être alimenté par le réservoir 5 tandis que, le raccord 25 étant désaccouplé, le corps 7 et l'arbre 15 du joint tournant ainsi que le conduit 24 de sortie du raccord 25 tournent en bloc, la seule friction existante et faible étant ici celle du joint à lèvre 33 sur le corps 26, d'ailleurs motivée ici par le seul souci d'éviter une rentrée d'air dans le raccord 25 et la canalisation d'alimentation 29. Le joint tournant faisant bloc se trouve pratiquement ici sous une légère surpression par rapport à l'atmosphère, celle de décharge dépendant du joint 33 et clapet 40, et il est donc à voir que toute usure ou fatigue inutile de service lui est ainsi épargnée.

La mise en service est réservée au seul temps nécessaire à la recharge du réservoir d'accumulation implanté sur la plate-forme.

Cette mise en service peut être placée sous la dépendance d'un pressostat usuel destiné à y maintenir la pression entre deux valeurs prédéterminées et déclenchant, dans l'intervalle de ces deux valeurs, la mise en marche du compresseur 4 et l'excitation de l'éventuelle électrovanne 38, pour provoquer l'alimentation du raccord 25 dont découle l'alimentation du réservoir 5 de la manière suivante.

L'irruption de fluide sous haute pression dans la chambre 30 du raccord a pour effet dynamique de plaquer rapidement sur le plateau 31 le corps 26 dont l'embase 27 s'abaisse contre la force du ressort 36, qui est calculée pour assurer simplement à elle seule l'état antérieur d'ouverture de la chambre 30. Le raccord 25 se trouve donc placé après une légère fuite de fluide à l'atmosphère par la voie du joint à lèvre 33, en état de fermeture étanche au niveau de l'anneau 32 et d'accouplement entre vorps 26 et conduit de sortie 24, c'est-à-dire que l'arbre 15 du joint tournant se trouve alors immobilisé en rotation avec ses joints de presse-étoupe 20 sous charge, mais cela seulement pendant le temps de rotation de la plate-forme que dure la recharge du réservoir d'accumulation 5.

Lorsque la pression maximale désirée est en effet atteinte dans ce dernier, le compresseur 4 est stoppé et lui-même ou l'éventuelle électrovanne 38 remettent le raccord 25 à l'échappement à l'atmosphère, de sorte que lorsque la pression dans le raccord et le joint tournant retombe au voisinage de la pression atmosphérique, l'ensemble corps 26 — embase 27 du raccord se trouve rappelé vers le haut sous l'action du ressort 36, ce qui a pour effet d'en désaccoupler le plateau 31 et de laisser de nouveau le joint tournant hors pression et toute faculté à l'arbre 15 de tourner avec le corps 7 du joint, sans usure ou fatigue inutile.

On notera qu'avec un tel agencement, les presse-étoupe du joint tournant peuvent éventuellement être rénovés sans arrêt de la plate-forme et de son appareillage, compte tenu du potentiel de réserve de fluide stocké dans le réservoir 5, cette rénovation pouvant s'effectuer en démontant le corps 7 de la bague de support 9, la fixation ici représentée par vis pouvant d'ailleurs à cet effet être du type rapide à encliquetage, de même que celle de la canalisation 13 peut être prévue par raccord rapide usuel.

L'arbre 15 peut aussi, éventuellement, être démonté par dévissage par rapport à la butée 22 après blocage du conduit 24 du raccord 25 par prise en clé.

A titre indicatif on a schématisé à la figure 1 une commande d'alimentation du réservoir 5 par manomètre 42 à contacts électriques de pression minimale et de pression maximale, qui sont respectivement reliés par des conducteurs 43 et 44 à deux pistes de contact 45, 46 ménagées sous la plate-forme et avec lesquelles coopèrent des contacts frottants 47, 48 montés dans un boîtier 49 fixé sur le châssis. Le contact 47 est relié par un conducteur 50 à l'enroulement d'appel d'un relais 51 ayant un enroulement d'automaintien alimenté par son contact 52, qui sert également à alimenter l'enroulement de l'électrovanne 38 ainsi qu'un relais d'alimentation 53 d'un moteur électrique M d'entraînement du compresseur 4, et cela à partir de la détection de pression minimale effectuée par le manomètre 42. Le contact 48 est relié par un conducteur 54 à un relais 55 dont le contact à ouverture 56 est placé sur le circuit d'automaintien du relais 51, de sorte que lorsque la pression maximale prévue d'alimentation du réservoir 5 est détectée par le manomètre 42, le ralais 51 se trouve désexcité, ce qui entraîne l'arrêt d'entraînement du compresseur 4 et le retour de l'électrovanne 38 à sa position de repos représentée au dessin.

Selon la caractéristique débit-pression du compresseur 4, on peut notamment envisager d'assurer l'accouplement du raccord 25 en ne faisant pas seulement appel au fluide sous pression délivré par le compresseur pour ce faire; mais en amorçant l'accouplement à l'aide d'une commande électromagnétique auxiliaire actionnée à la mise en marche du compresseur, par exemple par la fermeture du contact 52 du relais 51.

Un tel agencement est illustré à la figure 2 selon lequel il est prévu électroaimant 57 fixé sur le châssis 2 et dont l'armature mobile 58 est solidaire d'un levier 59 articulé à l'une de ses extrémités sur le boîtier de l'électroaimant et dont l'autre extrémité forme une fourche à dents encochées montées en prise avec deux ergots latéraux 60 rapportés sur le corps 26 du raccord 25.

L'excitation de l'électroaimant 57 permet ainsi d'amorcer l'accouplement du raccord 25 sans fuite du fluide sous pression délivré par le compresseur, étant entendu que c'est la pression même du fluide distribué qui confirme cet accouplement et en assure essentiellement l'effort de maintien pendant l'alimentation en fluide sous pression du réservoir 5.

D'autres variantes peuvent bien entendu être imaginées au-delà de ces réalisations décrites à titre illustratif, tout en restant dans le cadre de l'invention.

**Revendications**

1. Dispositif d'alimentation en fluide gazeux sous haute pression d'une plate-forme tournante (1) sur un châssis (2) sur lequel est disposée une source de pression (4), comprenant un joint tournant incluant deux éléments (7; 15, 24) conducteurs de fluide montés à rotation relative dans l'axe géométrique (3) de rotation de la plate-forme, l'un (7) de ces éléments solidaire en rotation de la plate-forme étant raccordé à un appareillage d'utilisation du fluide disposé sur la plate-forme et l'autre (15, 24) étant destiné à être alimenté par ladite source de pression, caractérisé en ce que l'élément (15, 24) conducteur de fluide du joint destine à être alimenté par la source de pression est libre en rotation par rapport a l'autre élément (7) et à la source de pression, et est relié à cette dernière par un raccord désaccouplable (25), ce raccord permettant d'accoupler de façon étanche l'élément (15, 24) conducteur de fluide à la source lors de l'alimentation en fluide sous pression, au cours de laquelle cet élément est immobilisé en rotation par rapport à l'autre élément (7).

2. Dispositif d'alimentation en fluide sous haute pression d'une plate-forme tournante, selon la revendication 1, caractérisé en ce que l'appareillage d'utilisation est doté d'un réservoir d'accumulation (5) de fluide sous pression sur la plate-forme destiné à être rempli et rechargé au travers de moyens de non-retour (5a) par commande de mise en débit de ladite source de pression et accouplement du raccord entre deux valeurs prédéterminées de pression dans ledit réservoir.

3. Dispositif d'alimentation en fluide sous haute pression d'une plate-forme tournante, selon la revendication 1, caractérisé en ce que le raccord précité comprend deux organes conducteurs de fluide formant respectivement un corps (26) et un organe de fermeture (31, 32) interne à ce dernier délimitant une chambre d'admission (30) du fluide sous pression normalement ouverte et se fermant en réponse à son alimentation par ladite source de pression.

4. Dispositif d'alimentation en fluide sous haute pression d'une plate-forme tournante, selon la revendication 3, caractérisé en ce qu'il est prévu des moyens de commande auxiliaires (57 à 60) destinés à amorcer l'accouplement dudit raccord (25) désaccouplable lors de son alimentation par ladite source de pression.

5. Dispositif d'alimentation en fluide sous haute pression d'une plate-forme tournante selon l'une des revendications précédentes, caractérisé en ce que le raccord désaccouplable comprend un joint (33) de non-rentrée d'air.

6. Dispositif d'alimentation en fluide sous haute pression d'une plate-forme tournante selon l'une des revendications précédentes, caractérisé en ce qu'il est associé à la source de pression des moyens (38) de mise à l'échappement du circuit d'alimentation du raccord désaccouplable qui sont pourvus d'un joint (40) de non-rentrée d'air.

**Patentansprüche**

1. Versorgungsvorrichtung für eine Drehscheibe (1) zur Zufuhr eines gasförmigen Mediums unter Hochdruck auf einem Rahmen (2), auf dem eine Druckquelle (4) angeordnet ist, die eine Drehverbindung mit zwei Leitungselementen (7, 15, 24) für das Medium umfaßt, die in der geometrischen Rotationsachse (3) der Drehscheibe gegeneinander verdrehbar angeordnet sind, wobei eines (7) dieser Elemente, das drehfest auf der Drehscheibe angeordnet ist, mit dem auf der Drehscheibe angeordneten, mit dem Medium betriebenen Gerät verbunden ist, und das andere (15, 24) dieser Elemente von der genannten Druckquelle aus gespeist wird, dadurch gekennzeichnet, daß das Leitungselement (15, 24) der Drehverbindung für das Medium, das von der Druckquelle aus gespeist wird, gegenüber dem anderen Element (7) und der Druckquelle frei drehbar angeordnet ist, und an diese letztere mittels eines auskuppelbaren Anschlusses (25) angeschlossen ist, wobei dieser Anschluß während der Zufuhr des Mediums unter Druck ein dichtes Ankuppeln des Leitungselementes (15, 24) für das Medium an die Quelle ermöglicht, währenddessen das Element drehfest gegenüber dem anderen Element angeordnet ist.

2. Versorgungsvorrichtung für eine Drehscheibe zur Zufuhr eines Mediums unter Hochdruck gemäß Anspruch 1, dadurch gekennzeichnet, daß das genannte, mit dem Medium betriebene Gerät mit einem Speichertank (5) für das Druckmedium auf der Drehscheibe ausgestattet ist, der über Einwegmittel (5a) zur Steuerung des Abflusses der genannten Druckquelle und der Verbindungskupplung zwischen zwei vorbestimmten Druckwerten im genannten Tank gefüllt bzw. nachgefüllt wird.

3. Versorgungsvorrichtung für eine Drehscheibe zur Zufuhr eines Mediums unter Hochdruck gemäß Anspruch 1, dadurch gekennzeichnet, daß die vorgenannte Verbindung zwei Leitungselemente für das Medium enthält, die als Gehäuse (26) bzw. innere Schließvorrichtung (31, 32) in diesem letzteren wirken, und eine Einströmkammer (30) für das Druckmedium abgrenzen, die normalerweise offen ist und auf Zufuhr von der genannten Druckkammer her mit Schließen anspricht.

4. Versorgungsvorrichtung für eine Drehscheibe zur Zufuhr eines Mediums unter Hochdruck gemäß Anspruch 3, dadurch gekennzeichnet, daß Hilfssteuermittel (57—60) zur Einleitung des Ankuppelvorgangs des genannten auskuppelbaren Anschlusses (25) während der Mediumzufuhr von der genannten Druckquelle her vorgesehen sind.

5. Versorgungsvorrichtung für eine Drehscheibe zur Zufuhr eines Mediums unter Hochdruck gemäß einem beliebigen der vorstehenden Ansprüche, dadurch gekennzeichnet, daß der auskuppelbare Anschluß eine falschluftsichere Fuge (33) hat.

6. Versorgungsvorrichtung für eine Drehscheibe zur Zufuhr eines Mediums unter Hochdruck gemäß einem beliebigen der vorstehenden Ansprüche, dadurch gekennzeichnet, daß der Druckquelle Mittel (38) zum Entlüften des Speisekreises des auskuppelbaren Anschlusses beigeordnet sind, die mit einer falschluftsicheren Fuge (40) ausgestattet sind.

**Claims**

1. A device for feeding gaseous fluid at high pressure to a platform (1) rotating on a frame (2) on which a pressure source (4) is placed, comprising a rotating seal containing two fluid flow components (7; 15, 24) mounted in relative rotation on the geometrical axis (3) of rotation of the platform, one of these components (7), fixed in rotation to the platform, being connected to a fluid using system placed on the platform and the other (15, 24) being designed to be fed by the said pressure source, characterized in that the fluid flow component (15, 24) of the seal designed to be fed by the pressure source is rotatable with respect to the other component (7) and to the pressure source and is connected to the latter by an uncouplable connection (25); this connection (25) makes it possible to couple without leakage the fluid flow component (15, 24) to the source when pressurized fluid is being supplied, during which time this component is locked in rotation with respect to the other component.

2. The device for feeding gaseous fluid at high pressure to a rotating platform, according to claim 1, characterized in that the using system is provided with a pressurized fluid accumulator tank (5) on the platform designed to be filled and recharged through non-return means (5a) by controlling the start of delivery from the said pressure source and coupling the connection between two preset values of pressure in the said accumulator tank.

3. The device for feeding gaseous fluid at high pressure to a rotating platform, according to claim 1, characterized in that the above-mentioned connection comprises two fluid flow elements forming respectively a body (26) and a closure element (31, 32) inside the latter delimiting a pressurized fluid admission chamber (30) that is normally open and closes when it is fed by the said pressure source.

4. The device for feeding gaseous fluid at high pressure to a rotating platform, according to claim 3, characterized in that it is provided with auxiliary control means (57 to 60) designed to initiate coupling of the said uncouplable connection (25) when it is being supplied by the said pressure source.

5. The device for feeding gaseous fluid at high pressure to a rotating platform according to any of the preceding claims, characterized in that the uncouplable connection comprises a seal (33) to prevent ingress of air.

6. The device for feeding gaseous fluid at high pressure to a rotating platform according to any of the preceding claims, characterized in that combined with the pressure source are means (38) for connecting the uncouplable connection feed circuit to exhaust which are provided with a seal preventing ingress of air.

0 023 451

FIG_1

FIG_2